## Europäisches Patentamt
## European Patent Office
## Office européen des brevets

(19)

(11) Veröffentlichungsnummer: **0 257 076 B1**

(12) **EUROPÄISCHE PATENTSCHRIFT**

(45) Veröffentlichungstag der Patentschrift:
17.07.91 Patentblatt 91/29

(51) Int. Cl.⁵: **B23K 1/00, B23K 26/04**

(21) Anmeldenummer: 87901471.0

(22) Anmeldetag: 28.02.87

(86) Internationale Anmeldenummer:
PCT/EP87/00122

(87) Internationale Veröffentlichungsnummer:
WO 87/05243 11.09.87 Gazette 87/20

(54) **VERFAHREN UND VORRICHTUNG ZUM MIKROLÖTEN.**

(30) Priorität: 01.03.86 DE 3606764

(43) Veröffentlichungstag der Anmeldung:
02.03.88 Patentblatt 88/09

(45) Bekanntmachung des Hinweises auf die
Patenterteilung:
17.07.91 Patentblatt 91/29

(84) Benannte Vertragsstaaten:
AT BE CH DE FR GB IT LI NL SE

(56) Entgegenhaltungen:
EP-A- 0 069 189
EP-A- 0 168 605
Patent Abstracts of Japan, Vol. 7, No. 230,
(M-249)(1375) 12 October 1983 & JP-
A-58122175 (NIPPON DENKI K.K.)

(73) Patentinhaber: **Messerschmitt-Bölkow-Blohm
Gesellschaft mit beschränkter Haftung
Robert-Koch-Strasse
W-8012 Ottobrunn (DE)**

(72) Erfinder: **MÖLLER, Werner
Ravensburger Str. 77
W-7900 Ulm (DE)**

**Beschreibung**

Die Erfindung betrifft ein Verfahren zum Mikrolöten, bei dem mit Hilfe eines Laserstrahles auf einem Werkstück eine Lötstelle und das da- rauf aufgebrachte Lot erhitzt werden, und eine Vorrichtung zu dessen Durchführung gemäß dem Gattungsbegriff der Ansprüche 1 und 5.

Das bekannte und verbreitete Laserschweißverfahren zeichnet sich durch berührungslose bzw. druckfreie, thermisch eng lokalisierte, dimensionsmäßig exakte und sehr feinstrukturierte, leicht automatisierbare Arbeitsweise aus und gewinnt daher in der Feinwerktechnik, Mikromechanik und Mikrotechnik zusehends an Bedeutung.

Dagegen ist das Mikrolöten mit dem Laser bisher wenig gebräuchlich. Das Laser-Mikrolöten mit Metall- oder Glasloten würde aber überall, wo stoffkundlich verschiedenartige Kleinteile miteinander thermisch schonend verlötet werden müssen, viele konstruktive Probleme lösen. Als Anwendungsgebiete kommen z.B. das druckfreie Kontaktieren und Fügen von thermisch wie mechanisch hochempfindlichen Mikromechanik-Sensoren, das Verbinden von Glasfaserlichtleitern oder von Verbundstoffelementen aus Glas, Keramik und Metall wie Schwingquarze, Piezoelemente, Fotodioden, Optokoppler, Mini-Elkos, Lumineszenzdioden, Mikromagnete, Ringbandkerne mit amorphen Metallen u. dgl. in Frage.

Trotz des vielseitigen und anspruchsvollen Bedarfs werden zum Mikrolöten erst in jüngster Zeit $CO_2$-Lötlaser angeboten. $CO_2$-Laser lassen sich aber nicht fein genug fokussieren und reflektieren auf Metallen stärker als beispielsweise kürzerwellige Festkörper-YAG-Laser. Die extrem starken Absorptionsunterschiede bei $CO_2$-Lasern – z.B. ca. 95% bei Kunststoffsubstraten und ca. 5% bei Metallen wie Gold – führen zu entsprechend extremen Temperaturunterschieden an den Materialgrenzen und damit zu Überhitzungen, Blasen- und Rißbildungen und Verspannungen. Aber auch das Mikrolöten mittels Festkörperlasern führte nicht zu einem Einsatz in der Serienfertigung, obwohl über Energiesteuerung versucht wurde, das genannte Problem zu lösen. Für eine einwandfreie Verlötung ist aber eine eng tolerierte Temperatur eine entscheidende Voraussetzung. Eine berührungslose Online-Temperaturkontrolle und -steuerung mit IR-Detektor bietet sich an, ist aber wegen der unterschiedlichen IR-Strahlung/Emissivität der verschiedenartigen Materialien schwierig.

Durch die EP-A2-01 68 605 ist eine Lötanlage der eingangs genannten Art bekannt geworden, die als Lötstelleninspektionsgerät bezeichnet werden darf, welches für Lötungen modifiziert und auf die Kontrolle von Lötstellen ausgerichtet ist und bei Erkennen einer fehlerhaften Lötung die Korrektur bzw. die Reparatur vornimmt. Für die industrielle Fertigung ist jedoch weder das Verfahren noch das Gerät geeignet, denn für eine optimale Laserlötung ist nicht nur die Schmelzung des Lotes auf der Oberseite erforderlich, sondern dieses muß auch die Rückseite, die Lochbohrung ausfüllen, Benetzung und Lotbildung auf der Unterseite durchführen und die Reaktion mit dem Flußmittel etc. ermöglichen, was eine definierbare Erhitzung des Lotes über den Schmelzpunkt hinaus erfordert.

Eine weitere Ausführungsform des Lötlasers ist aus der JP-A-58-122 175 bekannt. Für diese Anlage trifft im wesentlichen das vorstehend Gesagte zu.

Es ist das Ziel der Erfindung, ein Verfahren zum Mikrolöten zu schaffen, bei dem die Temperatur der Lötstelle unabhängig vom Absorptionsvermögen der zu verbindenden Materialien sehr genau tolerierbar, zur computergesteuerten Fertigung einsetzbar und weitgehend mit bewährten Geräte-Komponenten und Materialien durchführbar ist.

Gemäß der Erfindung wird dies dadurch erreicht, daß nach Erreichen des ermittelten Schmelzpunktes der Erhitzungsvorgang für die Lötstelle abgebrochen wird.

Da dieser für jede Legierung infolge der Schmelzwärme sehr genau bestimmte Punkt die Verflüssigung bzw. Erstarrung des Lotes kennzeichnet, kann er als Einsatzpunkt für die weiterfolgenden Maßnahmen verwendet werden. Sobald das Lot vollständig geschmolzen und die Lötung beendet ist, steigt der Temperaturgradient bzw. das Signal wieder steil an.

Zweckmäßig wird der Abbruch des Erhitzungsvorganges nach einer einstellbaren Verzögerungszeit erfolgen, so daß das Lot über den Schmelzpunkt hinaus definierbar weiter erhitzt wird.

Vorteilhaft wird der Abbruch des Erhitzungsvorganges auch durch Weiterbewegen des Werkstückes bewirkt. Das hat den Vorteil, daß der Laser selbst mit konstanter Leistung bzw. Pulsfrequenz betrieben werden kann. Da das Werkstück ohnehin relativ zum Laserstrahl bewegbar sein muß und deshalb auf einem xy-Tisch montiert ist, kann dessen Antrieb direkt von der Elektronik, die den Schmelzpunkt detektiert und ein ggf. verzögertes Signal bei dessen Erreichen liefert, angesteuert werden. Hierbei wirkt sich vorteilhaft aus, daß die in der Mikroelektronik verwendeten $AL_2O_3$-Substrate das 1,06 μm Licht des Nd-YAG-Laser kaum absorbieren und daher auch nicht erhitzt werden. Die Richtung der Weiterbewegung ist vom Werkstück bzw. von der Programmierung der Lötbahn bestimmt.

Somit ergibt sich ein Regelkreis, bei dem der für den Prozeß entscheidende Schmelzpunkt des Lotes die Steuerung des ganzen Vorganges übernimmt. Die Lötstelle wird sooft mit dem Laserstrahl gepulst bzw. solange erhitzt, bis die erforderliche Temperatur erreicht ist. Durch die Weiterbewegung des Werkstückes bei erreichter Temperatur ergibt sich eine besonders einfache Regelung, da der Laser selbst nicht beeinflußt werden muß. Das Niveau der Laserleistung wird vorher für den Werkstoff eingestellt und die jeweilige Schmelzbzw. Löttemperatur, die auch vom Flußmittel sowie der Lotmenge, Schichtdicke und Lotpadform abhängt, über die jeweilige Expositionszeit erreicht. Über- und Untertemperaturen werden zuverlässig vermieden, so daß eine echte Lötung erreicht wird. Die Genauigkeit der Temperatureinstellung erhöht sich mit dem Laserstrahldurchmesser und ist umgekehrt proportional zur Strahlungsenergiedichte und Arbeitsgeschwindigkeit, was ein weitgehendes Eingehen auf spezifische Bedürfnisse des Werkstückes ermöglicht. Eine genauere Temperatureinstelleung erreicht man auch durch eine Vorwärmung ( −30°C und Mattbeizung der Lötstellen bzw. Kontaktmaterialien.

Weitere Vorteile und Einzelheiten der Erfindung ergeben sich aus den weiteren Unteransprüchen und der Beschreibung, in der anhand der Zeichnung ein Ausführungsbeispiel erörtert wird. Es zeigen :

Fig. 1    eine schematische Darstellung der zur Durchführung des erfindungsgemäßen Verfahrens dienenden Anlage,

Fig. 2    eine Meßkurve mit dem Temperaturverhalten eines erhitzten Lots,

Fig. 3    die Wärmeaufnahme des Lots in Abhängigkeit von der Temperatur.

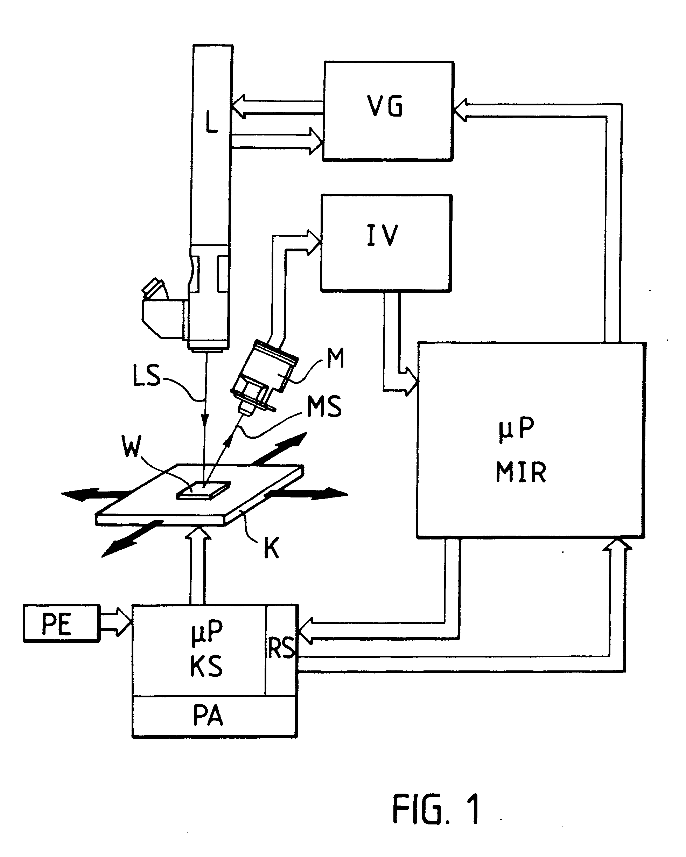

Figur 1 zeigt eine schematische Darstellung der zur Durchführung des erfindungsgemäßen Verfahrens dienenden Anlage. Dabei befindet sich das zu bearbeitende Werkstück W auf einem xy-Koordinatentisch K, der in bekannter Weise mittels einer Koordinaten-Streckensteuerung KS in der Werkstückebene bewegbar ist. Die Koordinatensteuerung KS hat eine Rechnerschnittstelle RS und einen Programmspeicher PA und kann ihrerseits bezüglich der anzusteuernden Koordinaten über eine Programmeingabe PE programmiert werden.

Darüber ist ein Dauerstrich-YAG-Laser L angeordnet, der den Laserstrahl LS liefert. Dieser Laser wird von einem Versorgungsgerät VG, das den Taktgeber und die Pulsdauerregelung für den Laser L enthält, gesteuert. Es enthält zudem zweckmäßig noch eine Einrichtung zur Leistungsmessung für den Laser L.

Neben dem Laser L befindet sich ein Infrarot-Meßkopf M, dessen Meßstrahlengang MS auf die Lötstelle auf dem Werkstück W ausgerichtet ist. Dieser mißt die von der Lötstelle ausgehende Wärmestrahlung und erzeugt im Verstärker IV ein entsprechendes digitales Signal für die Oberflächentemperatur der Lötstelle, das an einen Mikroprozessor MIR weitergegeben wird. Zur Überwachung enthält der Verstärker IV zweckmäßig eine Digitalanzeige für die Lötstellentemperatur. Die spektrale Empfindlichkeit des IR-Detektors wird dem Meßtemperaturbereich angepaßt.

Der Mikroprozessor MIR enthält die Meßwertinterpretations- und die Regelungssoftware, die aus dem vom Verstärker IV gelieferten Temperaturverlauf den Schmelzpunkt des Lotes an der Lötstelle ermittelt. Bei Detektion des entsprechenden Zustandes erfolgt die Pulsgabe an die Koordinaten-Streckensteuerung KS über deren Rechnerschnittstelle RS. Die Koordinaten-Streckensteuerung KS liefert ihrerseits nach vollzogener Werkstückbewegung ein Signal zurück an den Mikroprozessor MIR. Ferner hat der Mikroprozessor MIR eine Verbindung zum Versorgungsgerät VG für den Laser L, über die der Laser L zum Beispiel während eines längeren Streckenvorschubes abgeschaltet werden kann.

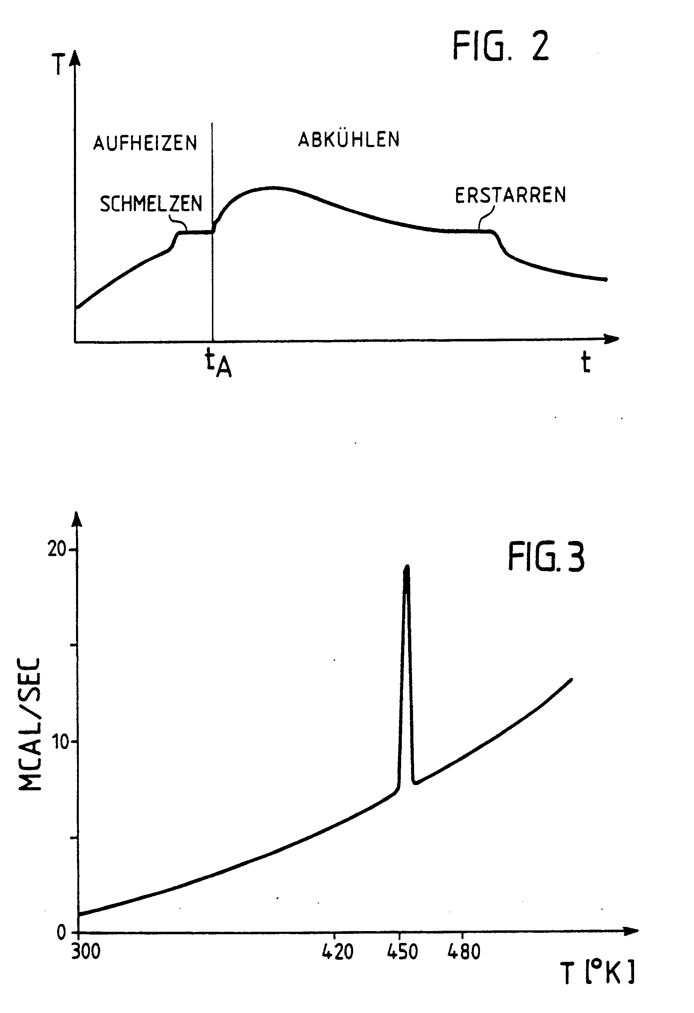

Figur 2 zeigt eine Meßkurve mit dem IR-Emissionsverhalten in Abhängigkeit von der Temperatur bei einem erhitzten Lots aus Sn/PB-Legierung und Figur 3 die Wärmeaufnahme des Lots in Abhängigkeit von der Temperatur. Die Kurve nach Fig. 2 wurde mit einem IR-Spektralpyrometer beim Aufheizen und Abkühlen gemessen. Bei konstanter Wärmezufuhr erhöht sich die Emission, bis beim Erreichen des Schmelzpunktes eine Verflachung eintritt. An der Stelle $t_A$, bei der das Lot vollständig verflüssigt ist und die Temperatur bzw. IR-Emission wieder ansteigt, wird die Wärmezufuhr abgeschaltet. Aufgrund der Trägheit des zur Messung benutzten Systems erfolgt noch eine Erhöhung der Emission, bis das Maximum überschritten und nach Abkühlung der Erstarrungspunkt erreicht wird. Die zusätzliche Erhöhung der Temperatur über den Schmelzpunkt hinaus kann, sofern gewünscht, durch eine Verzögerung bei der Weitergabe des Signals oder durch den Abzug des der Temperaturerhöhung entsprechenden Wertes von der Meßgröße fest oder veränderbar programmiert werden.

Figur 3 zeigt die Wärmeaufnahme des Lotes in Abhängigkeit von der Temperatur. Die erhöhte Aufnahme am Schmelzpunkt, die zu der ausgenutzten Unstetigkeit bei der Infrarotemission führt, ist deutlich zu erkennen. Die kalorimetrische Messung wurde mit einem Differential-Scanning-Calorimeter (DSC 2 von Perkin-Elmer) durchgeführt.

**Patentansprüche**

1. Verfahren zum Mikrolöten, bei dem mit Hilfe eines Laserstrahles (LS) auf einem Werkstück (W) eine Lötstelle und das darauf aufgebrachte Lot erhitzt werden, wobei die Wärmeabstrahlung (MS) des erhitzten Lotes mit einem Infrarotdetektor (M) gemessen und aus dem Meßsignal mit Hilfe einer elektronischen Einrichtung (MIR) die beim Erreichen des Schmelzpunktes des Lotes entstehende Unstetigkeit ermittelt wird, **dadurch gekennzeichnet,** daß bei oder nach Durchlaufen des derart ermittelten Schmelzpunktes und Lötbereiches der Erhitzungsvorgang nach einer einstellbaren Verzögerungszeit für die Lötstelle abgebrochen wird.

2. Verfahren nach Anspruch 1, **dadurch gekennzeichnet,** daß der Abbruch des Erhitzungsvorganges durch Weiterbewegen des Werkstückes (W) erfolgt.

3. Verfahren nach den Ansprüchen 1 oder 2, **dadurch gekennzeichnet,** daß die Lot- bzw. Kontaktmaterialien vorgewärmt werden.

4. Verfahren nach einem der vorhergehenden Ansprüche 1 bis 3, **dadurch gekennzeichnet,** daß die Kontaktmaterialien mattgebeizt oder aufgerauht werden.

5. Vorrichtung zum Mikrolöten mit einem Laser zur Erhitzung einer auf einem Werkstück befindlichen Lötstelle und des darauf aufgebrachten Lotes, wobei zur Messung der Wärmeabstrahlung des erhitzten Lotes ein Infrarotdetektor (M) und zur Ermittlung des Schmelzpunktes des Lotes aus dem Meßsignal eine elektronische Einrichtung (IV, MIR) vorgesehen sind, die durch Auswerten des Meßsignales die beim Erreichen des Schmelzpunktes des Lotes entstehende Unstetigkeit ermitteln, **dadurch gekennzeichnet,** daß nach Erreichen des derart ermittelten Schmelzpunktes der Erhitzungsvorgang für die Lötstelle durch eine einstellbare Verzögerungseinrichtung (in MIR) abgebrochen wird.

6. Vorrichtung nach Anspruch 5, **dadurch gekennzeichnet,** daß die elektronische Einrichtung (MIR) mit der Stellvorrichtung (KS) eines xy-Tisches verbunden ist, auf dem das Werkstück (W) befestigt ist und dieselbe steuert.

7. Vorrichtung nach einem der Ansprüche 5 oder 6, **dadurch gekennzeichnet,** daß der Laser (L) ein gepulster Nd-YAG-Laser mit langer Pulsdauer oder ein elektrooptisch schaltbarer CW-Nd-YAG-Laser ist.

## Claims

1. A method of micro-soldering, in which a soldering location on a workpiece (W) and solder applied thereon are heated by means of a laser beam (LS), in which respect the thermal radiation (MS) of the heated solder is measured by way of an infra-red detector (M) and in the developing vorticity of the solder when reaching its melting point is detected by means of a measuring signal with the aid of an electric device (MIR), **characterised in that** the process of heating the soldering location is interrupted after an adjustable delay period during or after passage of the thus detected melting point and of the soldering location.

2. A method according to claim 1, **characterised in that** the heating process is interrupted by moving the workpiece (W).

3. A method according to claim 1 or 2, **characterised in that** the soldering or contact materials respectively are pre-heated.

4. A method according to one of the above claims 1 to 3, **characterised in that** the contact materials are matt varnished or roughened.

5. Apparatus for micro-soldering comprising a laser for heating a soldering location on a workpiece and solder to be applied thereto, in which respect an infra-red detector (M) is provided for measuring the heat radiation of the heated solder, and an electronic device (IV, MIR) is provided for detecting the melting point of the solder by way of a measuring signal, the device determining the vorticity of the solder when reaching its melting point by evaluating the measuring signal, **characterised in that** the process of heating the soldering location is interrupted by means of an adjustable delay device (in MIR) after reaching the thus detected melting point.

6. Apparatus according to claim 5, **characterised in that** the electronic device (MIR) is connected to the control means (KL) of an xy table to which the workpiece (W) is mounted and which controls same.

7. Apparatus according to one of claims 5 or 6, **characterised in that** the laser (L) is pulsed Nd-YAG laser of long pulse duration or an electro-optically switchable CW-Nd-YAG laser.

## Revendications

1. Procédé de microsoudure dans lequel, sur une pièce (W), un emplacement de soudure et la soudure appliquée sur celui-ci sont chauffés à l'aide d'un faisceau laser (LS), le rayonnement thermique (MS) de la soudure chauffée étant mesuré avec un détecteur (M) de rayons infrarouges et la discontinuité, apparaissant lorsque le point de fusion de la soudure est atteint, étant déterminée à partir du signal de mesure, à l'aide d'un dispositif électronique (MIR), caractérisé par le fait que, lors du ou après le passage du point de fusion et de la plage de soudure, ainsi déterminés, l'opération de chauffage est interrompue pour l'emplacement de soudure après une durée de temporisation réglable.

2. Procédé selon la revendication 1, caractérisé par le fait que l'interruption de l'opération de chauffage se fait par déplacement de la pièce (W).

3. Procédé selon la revendication 1 ou 2, caractérisé par le fait que les matériaux de soudure et/ou de contact sont préchauffés.

4. Procédé selon l'une des revendications 1 à 3, caractérisé par le fait que les matériaux de contact sont décapés mat ou rendus rugueux.

5. Dispositif de microsoudure comprenant un laser pour chauffer un emplacement de soudure, se trouvant sur une pièce, et la soudure appliquée sur cet emplacement, un détecteur (M) de rayons infrarouges étant prévu pour mesurer le rayonnement thermique de la soudure chauffée et un dispositif électronique (IV, MIR) étant prévu pour déterminer le point de fusion de la soudure à partir du signal de mesure, le détecteur et le dispositif électronique déterminant, par l'exploitation du signal de mesure, la discontinuité apparaissant lorsque le point de fusion de la soudure est atteint, caractérisé par le fait qu'après avoir atteint le point de fusion ainsi déterminé, l'opération de chauffage pour l'emplacement de soudure est interrompue par un dispositif de temporisation (dans MIR) réglable.

6. Dispositif selon la revendication 5, caractérisé par le fait que le dispositif électronique (MIR) est relié à un dispositif de manoeuvre (KS) d'une table XY, sur laquelle est fixée la pièce (W), et commande ledit dispositif de manoeuvre.

7. Dispositif selon l'une des revendications 5 ou 6, caractérisé par le fait que le laser (L) est un laser Nd/YAG pulsé à durée d'impulsion longue ou un laser CW/Nd/YAG commandé par voie électrooptique.

FIG. 1

## FIG. 2

AUFHEIZEN

ABKÜHLEN

SCHMELZEN

ERSTARREN

$t_A$

## FIG. 3